# EUROPEAN PATENT APPLICATION

(11) **EP 1 245 937 A1**
(43) Date of publication of application: **02.10.2002**
(21) Application number: 02252269.2
(22) Date of filing: 27.03.2002
(51) Int. Cl.: G01K 1/02

(54) **Monitoring system**

(30) Priority: 28.03.2001 GB 0107681
(71) Applicant: Reflowtech International Limited, Newport, South Wales NP20 4PG (GB)
(72) Inventor: Hayward, Michael Robert, Newport, NP19 8BG, South Wales (GB)
(74) Representative: Evans, Huw David Duncan

(57) **Abstract**

A monitoring system for sensing temperature inside a process chamber 11 of processing apparatus comprises a fluid flow duct 12 extending through the chamber 11 and temperature sensors 16 for sensing the temperature of fluid flowing along the duct 12.

The fluid in the flow duct 12 exhibits a mass which will take time to change temperature. The output of the sensors 12 can be used to provide an accurate determination of the effect of the process on a product carried through the chamber 10, by knowing the relationship between the temperature coefficient of the fluid and the temperature coefficient of the products being processed.

## Description

This invention relates to a monitoring system for manufacturing processes involving heating or cooling.

Many manufacturing processes utilise processing equipment which heats or cools the product being manufactured. Typically, such processing equipment comprises a process chamber, possibly consisting of several sones, means for altering the temperature in the chamber and conveyor system for transporting the product through the chamber.

It is vitally important to ensure that both the product being manufactured and the processing equipment are controlled. Typically this has been achieved by utilising one or a combination of the following three methods.

The first of these methods comprises using measurement apparatus, which is an integral part of the processing equipment, and which forms a part of the feedback loop that controls the equipment. The measurement apparatus normally consists of a series of thermal sensors (such as thermocouples and pyrometers), a motion sensing device (such as a rotary encoder) and in some cases frequency control sensors that are used to monitor the performance of convection fans.

Each of the above-mentioned sensors is crucial to the performance of the processing equipment. However, the data which they collect is mutually independent and gives no clue as to the effect that each variable may have on the product being manufactured.

The sensors must be considered as being integral to the processing equipment and as such cannot be used for any independent or external type of process monitoring. Calibration of these sensors can also prove difficult.

The second method involves attaching an independent logging device to a sample product and allowing the sample to pass through the processing equipment. A disadvantage of this method is that the measurements are conducted on a sample product, which in many cases is not the same as the product being manufactured. This means that the sample product will not necessarily be affected by the processing conditions in the same manner as the actual products are. Accordingly, the results are generally unreliable.

A second disadvantage of this method is that it does not provide a continuous method of control due to the fact that the sample products are only introduced periodically. Accordingly, when the processing equipment fails, it may be some time before this is detected.

A third disadvantage of this method is that it does not measure all of the parameters that are necessary to control the process fully and can thus there is a risk that a problem can be missed or associated with the wrong place.

A fourth disadvantage of this method is that production has to be stopped to introduce and recover the sample product. It will be appreciated that this results in a drop in productivity.

The third method utilises a combination of thermocouples implanted in the process chamber to monitor air temperatures. An encoder is also used to record conveyor performance. This type of system measures some of the data required for full control all of the time but does not include measurements for convection settings.

We have now devised a monitoring system which alleviates the above-mentioned problems.

### SUMMARY OF THE INVENTION

In accordance with this invention, as seen from a first aspect, there is provided a monitoring system comprising a fluid flow duct arranged to extend through a processing chamber of a processing apparatus, means for causing a flow of fluid along the flow duct and temperature sensing means for sensing the temperature of fluid flowing along the duct.

The fluid in the flow duct exhibits a mass which will take time to heat up or cool down depending on the nature of the process being performed. Thus, an accurate determination of the effect of the process on a product can be established by knowing the relationship between the so-called temperature coefficient of the fluid and the temperature coefficient of the products being produced.

Preferably the system is arranged to determine the change in temperature of the product from the relationship between the temperature coefficients of the fluid and the product. This relationship may be determined by statistical analysis.

The diameter of the duct, the nature of the fluid and the flow rate are all factors which affect the degree of change of temperature of the fluid as it flows through the process chamber. Accordingly, the system can be tailored to suit different processes. For example, in a process where the products being processed are subjected to a subtle change in temperature, the chosen fluid preferably exhibits a high coefficient of temperature.

In one embodiment, the fluid may comprise water which flows along the duct under the applied water pressure. Alternatively, the fluid may comprise water or another fluid with means being provided for pumping the fluid along the duct.

The fluid leaving the duct will not be at the same temperature as the fluid entering the duct. However, in order that the fluid can be re-cycled, means are preferably provided in a return flow duct connected between the outlet and inlet of the duct for changing the temperature of the fluid by substantially the opposite amount to which the temperature changes as it flows between the inlet and outlet of the duct. In order to achieve this, the system preferably comprises temperature sensing means at the inlet and outlet, means for determining the change of temperature of fluid flowing between the inlet and outlet and control means for controlling the temperature changing means.

The temperature changing means may comprise a heat exchanger.

Preferably the system comprises motion-sensing means for sensing the rate of passage of products through the chamber.

The motion sensing means preferably comprises a transmitter and receiver which produces an output in accordance with a wireless signal received by the receiver from the transmitter in accordance with the rate of passage.

Preferably means are provided for sensing the air temperature within the chamber.

Preferably the system comprises processor means arranged to produce an output in accordance with signals received from the fluid temperature sensing means, the motion sensing means and the air temperature sensing means.

Also in accordance with this invention, as seen from a second aspect, there is provided process apparatus comprising a process chamber, means for heating or cooling the process chamber, means for conveying products to be processed through the chamber and a monitoring system for monitoring the operation of the apparatus, the monitoring system comprising a fluid flow duct extending through the chamber, means for causing a flow of liquid along the duct and temperature sensing means for sensing the temperature of fluid flowing along the duct.

Also in accordance with this invention, there is provided a method of determining the change in temperature of a product passing through a process chamber, comprising causing a flow of fluid along a duct extending through the process chamber and determining the temperature of the fluid at at least two points along the duct.

### BRIEF DESCRIPTION OF THE DRAWINGS

Embodiments of this invention will now be described by way of example only, and with reference to the accompanying drawings, in which:
FIGURE 1 is a longitudinal sectional view through the process chamber of a processing apparatus incorporating an embodiment of monitoring system in accordance with this invention;
FIGURE 2 is a different longitudinal sectional view through the processing chamber of Figure 1;
FIGURE 3 is a schematic diagram of the process chamber of Figure 1; and
FIGURE 4 is a schematic diagram of a process chamber of a processing apparatus incorporating an alternative embodiment of monitoring system in accordance with this invention.

### DETAILED DESCRIPTION OF THE PREFERRED EMBODIMENTS

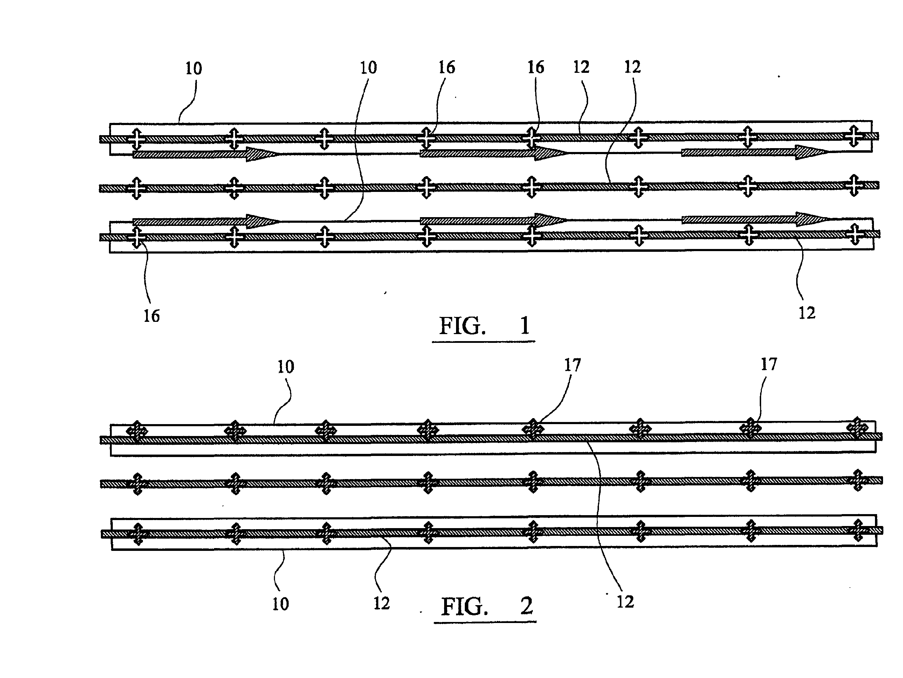

Referring to Figures 1 to 3 of the drawings there is shown an apparatus for heating printed circuit boards to cause solder paste thereon to flow into contact with the terminals of electrical components which have been assembled on the board.

The processing apparatus comprises a plurality of conveyors 10 which extend through a heated processing chamber 11. In use the printed circuits are conveyed through the processing chamber 11 by the conveyors 10.

In accordance with this invention a plurality of ducts 12 extend through the chamber, with a duct 12 preferably being provided for each conveyor 10. The ducts 12 are filled with a fluid (ie liquid or a gas) which is pumped between an inlet and an outlet of the duct 12.

A plurality of thermocouples 16 are mounted at intervals along the ducts 12 to directly sense the temperature of the fluid therein. Also a plurality of thermocouples 17 are provided for sensing the air temperature within the chamber 11. Preferably the thermocouples 17 have a low temperature coefficient and thus produce an output which instantly reflects any changes of air temperature within the chamber 11.

A motion sensor 15 senses the speed of travel of products on the conveyors 10.

The outlet of each ducts 12 is connected to its inlet by a return duct 13. A heat exchanger 14 is provided in the return duct 13 for cooling fluid, so that the fluid entering the ducts 12 is a constant temperature. The heat exchanger 14 may comprise refrigeration means or simply a series of coils in the return duct 13.

In use, the fluid in the ducts 12 heats up as it flows through the chamber 11. The rate of change of temperature is dependent on the nature of the fluid that is chose, the diameter of the ducts and the flow rates: these are preferably selected according to the nature of the process being performed within the chamber.

The thermocouples 16 detect the temperature of the fluid at various points along the duct. The relationship between the temperature coefficients of the products being processed and the fluid is preferably known by statistical analysis and as such the actual change in temperature of the products and/or components thereon can be accurately determined by a processor (not shown) connected to the outputs of the thermocouples 16.

The output of the motion sensor 15 also informs the processor whether the conveyors are moving the products at the correct speed and, if necessary, the processor can adjust the speed of the conveyors 10 to increase or decrease the amount of time which the products remain in the chamber 11 and thereby respectively increase or decrease the temperature to which they are heated.

In its simplest form the processor may just be arranged to log temperatures at a programmable interval to provide a graphical output of the results. These results may be compared with tolerances that are either calculated by the processor or input manually. The system will record the date and time of these readings and will store the information in an archive to provide historical data.

A bar-code reader or other device may (not shown) be incorporated to record individual products as they pass along the conveyors 10 in order to the conditions which each product is subjected to inside the chamber 11. This enables the manufacturing history of each product to be traced and hence provides a means for identifying the cause of faulty products.

The processor is preferably arranged to raise an alarm in the event that an error is detected in the process. It may also be capable of communicating with the production apparatus to block further production or to instigate remedial actions.

The system is preferably expandable to network its functionality and to raise remote alarms via the Internet or other telecommunications links.

The processor is preferably expandable to provide statistical process control charts and two way communications with the production apparatus as hereinbefore mentioned.

Although initially intended as a monitoring system it is envisaged that future development will enable the development of "real" product profiles by comparing measured results against known standards. This will significantly increase the power of the system.

The system may be incorporated into the production apparatus at the time of its manufacture or may be installed at a later date as a retrofit.

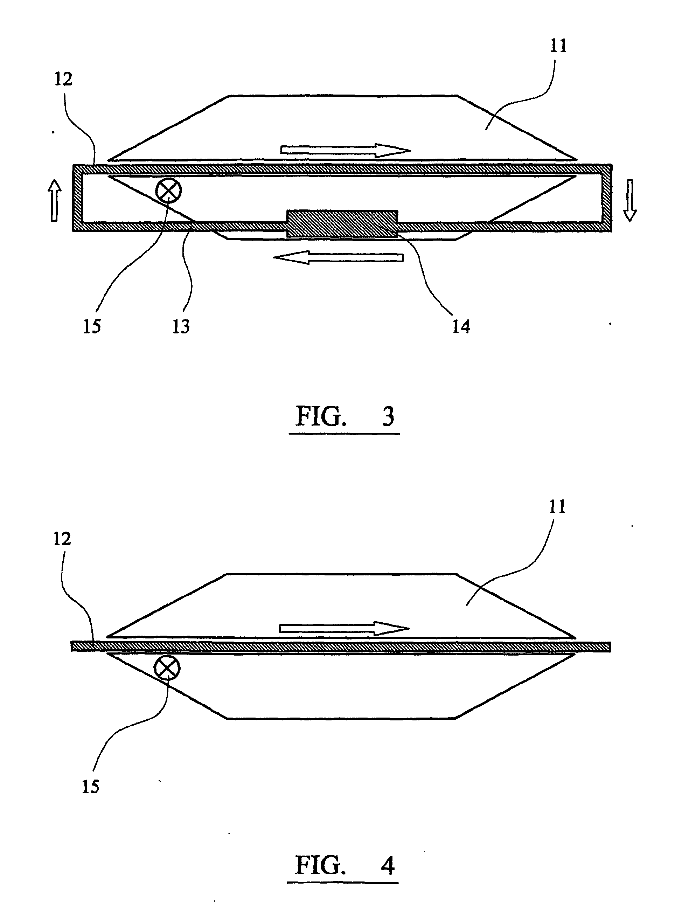

Referring to Figure 4 of the drawings, there is shown a similar processing apparatus to the apparatus of Figures 1 to 3 and like parts are given like reference numbers. In this embodiment, the inlet to the duct 12 is connected to the mains water supply and the outlet of the duct 12 is connected to a drain, thereby alleviating the need to provide a return duct or heat exchanger. However, a disadvantage of this arrangement is that the temperature coefficient of water may not be suitable for all applications. Furthermore, water boils at 100°C, thereby making it unsuitable for use in processes which exceed this temperature. The same applies to processes which freeze to temperatures below 0°C.

A measuring system in accordance with this invention is extremely simple in operation and construction and as such is inexpensive and straightforward to install in either new or existing apparatus but yet gives accurate and reliable data of the process functions without any of the disadvantages of known systems.

## Claims

1. A monitoring system comprising a fluid flow duct arranged to extend through a processing chamber of a processing apparatus, means for causing a flow of fluid along the flow duct and temperature sensing means for sensing the temperature of fluid flowing along the duct.

2. A monitoring system as claimed in claim 1, in which the system is arranged to determine the change in temperature of the product from the relationship between the temperature coefficients of the fluid and the product.

3. A monitoring system as claimed in claim 1, in which the fluid comprises water which flows along the duct under an applied water pressure.

4. A monitoring system as claimed in claim 1, in which the fluid may comprise water or another fluid with means being provided for pumping the fluid along the duct.

5. A monitoring system as claimed in claim 4, in which means are provided in a return flow duct connected between the outlet and inlet of the duct for changing the temperature of the fluid by substantially the opposite amount to which the temperature changes as it flows between the inlet and outlet of the duct.

6. A monitoring system as claimed in claim 5, in which said temperature changing means comprises a heat exchanger.

7. A monitoring system as claimed in claim 5, comprising temperature sensing means at the inlet and outlet, means for determining the change of temperature of fluid flowing between the inlet and outlet and control means for controlling the temperature changing means.

8. A monitoring system as claimed in any preceding claim, comprising motion-sensing means for sensing the rate of passage of products through the chamber.

9. A monitoring system as claimed in claim 8, in which said motion sensing means comprises a transmitter and receiver which produces an output in accordance with a wireless signal received by the receiver from the transmitter in accordance with the rate of passage.

10. A monitoring system as claimed in any preceding claim, comprising means for sensing the air temperature within the chamber.

11. Process apparatus comprising a process chamber, means for heating or cooling the process chamber, means for conveying products to be processed through the chamber and a monitoring system for monitoring the operation of the apparatus, the monitoring system comprising a fluid flow duct extending through the chamber, means for causing a flow of liquid along the duct and temperature sensing means for sensing the temperature of fluid flowing along the duct.

12. Process apparatus as claimed in claim 11, in which the system is arranged to determine the change in temperature of the product from the relationship between the temperature coefficients of the fluid and the product.

13. Process apparatus as claimed in claim 11, in which the fluid comprises water which flows along the duct under an applied water pressure.

14. Process apparatus as claimed in claim 11, in which the fluid comprises water or another fluid with means being provided for pumping the fluid along the duct.

15. Process apparatus as claimed in claim 14, in which means are provided in a return flow duct connected between the outlet and inlet of the duct for changing the temperature of the fluid by substantially the opposite amount to which the temperature changes as it flows between the inlet and outlet of the duct.

16. Process apparatus as claimed in claim 15, comprising temperature sensing means at the inlet and outlet, means for determining the change of temperature of fluid flowing between the inlet and outlet and control means for controlling the temperature changing means.

17. Process apparatus as claimed in claim 14, in which said temperature changing means comprises a heat exchanger.

18. Process apparatus as claimed in claim 11, comprising motion-sensing means for sensing the rate of passage of products through the chamber.

19. Process apparatus as claimed in claim 18, in which motion sensing means comprises a transmitter and receiver which produces an output in accordance with a wireless signal received by the receiver from the transmitter in accordance with the rate of passage.

20. Process apparatus as claimed in claim 11, comprising means for sensing the air temperature within the chamber.

21. A method of determining the change in temperature of a product passing through a process chamber, comprising causing a flow of fluid along a duct extending through the process chamber and determining the temperature of the fluid at at least two points along the duct.
